# EUROPEAN PATENT SPECIFICATION

(11) **EP 0 314 010 B1**
(45) Date of publication and mention of the grant of the patent: **18.05.1994**
(21) Application number: 88117571.5
(22) Date of filing: 21.10.1988
(51) Int. Cl.: G11B 23/00

(54) **Information recording disk**
Informationsaufnahmeplatte
Disque d'enregistrement d'information

(30) Priority: 27.10.1987 JP 270742/87; 29.10.1987 JP 274106/87; 26.11.1987 JP 298186/87; 27.06.1988 JP 158806/88
(43) Date of publication of application: 03.05.1989
(73) Proprietor: SEIKO EPSON CORPORATION, Shinjuku-ku Tokyo-to (JP)
(72) Inventor: Ota, Tsutomu, Suwa-shi Nagano-ken (JP); Sugimoto, Mamoru, Suwa-shi Nagano-ken (JP); Nose, Yasuto, Suwa-shi Nagano-ken (JP); Yoshitaki, Hidetoshi, Suwa-shi Nagano-ken (JP); Higashi, Tatsuro, Suwa-shi Nagano-ken (JP); Hayashi, Takashi, Suwa-shi Nagano-ken (JP)
(74) Representative: Hoffmann, Eckart, Dipl.-Ing.

(56) References cited:
- EP-A- 0 227 981
- EP-A- 0 230 963
- EP-A- 0 233 644
- EP-A- 0 266 746
- DE-A- 2 624 375
- PATENT ABSTRACTS OF JAPAN vol. 12, no. 388 (P-771)(3235) 17 October 1988,& JP-A-63 129578
- PATENT ABSTRACTS OF JAPAN vol. 12, no. 317 (P-750)(3164) 29 August 1988,& JP-A-63 81667

## Description

### BACKGROUND OF THE INVENTION

### Field of the Invention

The present invention relates to an information recording disk used in an optical memory which may advantageously be used as an external memory of a computer.

### Prior Art

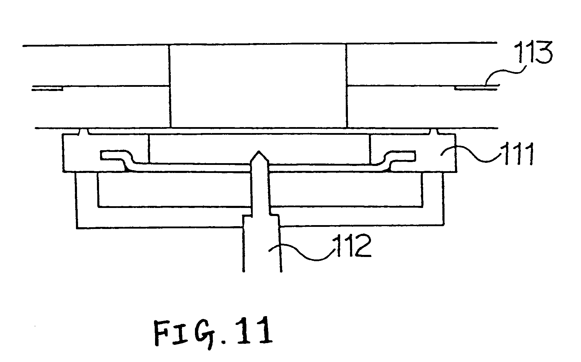

Specifications for a hub of a conventional information recording disk are known, for instance, from Items 4 .9 in IS0/TC97/SC23 DOCUMENT No. 126. According to these specifications, a hub 104 may be mounted either on one surface of disk substrates, as shown in Fig. 10, or on both surfaces of disk substrates. In either of these cases, the hub is mounted in such a manner that it is bonded or ultrasonic-welded to a reference plane which is on the outer side of a disk substrate 11 that is provided for recording and reproduction.

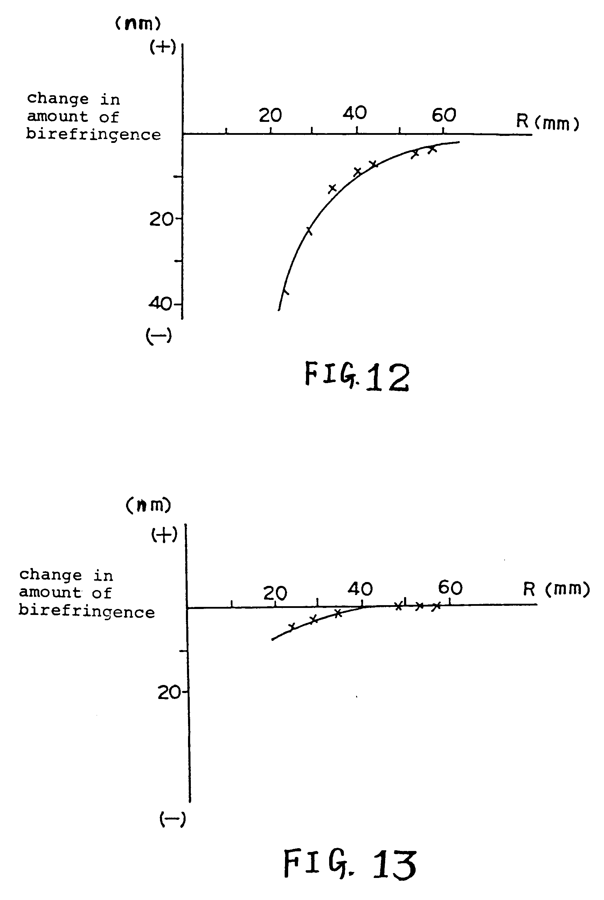

A conventionally adopted method of attaching a hub, which is bonding or ultrasonic welding, however, causes an increase in birefringence at the disk substrate. Fig. 12 shows the change in the amount of birefringence before and after welding the hub. Data shown in Fig. 12 were obtained by measuring double-path amounts of variation in birefringence, using 633 nm He-Ne laser parallel beams. It was found that, after a hub had been ultrasonic-welded to a polycarbonate substrate, the amount of variation in birefringence increased by 40 nm at a radius of 23 mm. An increase in birefringence may adversely affect the disk, causing such problems as degraded signal qualities and unstable operations of servomechanisms.

Other problems which may be encountered with a conventional arrangement will be described with reference to Fig. 11. When a disk with a hub 111 mounted thereon is being mounted on a drive, it is necessary that the disk with the hub 111 is kept away from contacting a spindle 112 and other guide members. For this purpose, the design of the related component parts must be such that it ensures the height of the hub 111 does not raise such a problem. A hub usually has a thickness of 2 to 3 mm. Such a thickness causes no problems when the design of the drive allows sufficient dimensional margins. However, when it is required to reduce the thickness of the drive and the disk, the thickness of the hub must be seriously taken into consideration. For instance, if two disk substrates each having a thickness of 1.2 mm are bonded to each other to create a total thickness of 2.4 to 2.5 mm, and if a hub having a thickness of 2.2 mm is bonded to the substrates, the overall thickness is 4.6 to 4.7 mm, which is considered to be relatively great.

Further, when the disk has been placed on the drive and is driven in the state shown in Fig. 11, the heat of a drive motor is transmitted to the hub 111 through the spindle 112, thereby causing a temperature gradient in the disk. As a result, the disk becomes distorted by the heat, thereby leading to changes in optical birefringence characteristics of the disk substrates or deterioration in their mechanical characteristics. The extent to which various portions of the disk are influenced depends on the distance from the hub, and the closer the portions, the greater the influence. Therefore, with a conventional arrangement in which the diameter of the hub 111 is relatively large and the hub extends close toward a recording portion 113, the above-described influence cannot be overlooked.

The document DE-A-26 24 375 discloses an information recording disk having the precharacterising features of claim 1. This disk comprises a disk substrate having information recorded on it and a hub for clamping said disk. The disk substrate has a stepped hole formed in the central portion thereof and the hub is inserted from the side of the substrate having the larger diameter portion of the stepped hole. The hub has a shape complementary to the stepped hole to fit into the stepped hole.

The document EP-A-0 227 981 discloses an information recording disk having two disk substrates and a hub for clamping said disk. The disk substrates have holes formed in a central portion thereof, both holes having the same diameter. Each disk substrate carries a ring-shaped recording layer having an outer diameter less than that of the disk substrate and an inner diameter larger than that of the hole.

The hub comprises two identical parts each inserted in one of the two substrates. Each hub has a larger diameter portion and a smaller diameter portion, the smaller diameter portion fitted into the hole of the corresponding disk substrate and the step between the two portions abutting on the surface of the disk substrate surrounding the hole. The two disk substrates are bound together with their recording layers and hub parts facing each other.

### SUMMARY OF THE INVENTION

An object of the present invention is to provide an information recording disk having a structure in which a hub has been attached in such a manner that the attaching of the hub does not cause any increase in birefringence at substrates.

Another object of the present invention is to provide an information recording disk which has a reduced overall thickness inclusive of the hub, and which is thus capable of eliminating the necessity for providing any complicated structures on the drive side to cope with a projecting hub, thereby enabling a simple design of the drive.

These objects are achieved with an information recording disk as claimed in claims 1 and 2, respectively.

Preferred embodiments of the invention are subject matter of the dependent claims.

### BRIEF DESCRIPTION OF THE DRAWING

Fig. 1 is a sectional view schematically showing a central portion of a disk in accordance with one embodiment of the present invention;
Fig. 2 is a sectional view schematically showing a central portion of a disk in accordance with another embodiment of the present invention;
Figs. 3 and 4 are sectional views each showing the periphery of a hub which is suitable for ultrasonic welding, Fig. 3 being a sectional view showing a state before the welding of the hub, and Fig. 4 being a sectional view showing a state after the welding of the hub;
Fig. 5 is a perspective view of an information recording disk in accordance with a third embodiment of the present invention;
Fig. 6 is a sectional view showing the periphery of a hub of an information recording disk in accordance with a fourth embodiment of the present invention;
Fig. 7 is a sectional view showing the periphery of a hub of an information recording disk in accordance with a fifth embodiment of the present invention;
Fig. 8 is a sectional view showing the periphery of a hub of an information recording disk in accordance with a sixth embodiment of the present invention;
Fig. 9 is a sectional view showing the periphery of a hub of an information recording disk in accordance with a seventh embodiment of the present invention;
Fig. 10 is a sectional view schematically showing a central portion of a conventional disk;
Fig. 11 is a sectional view showing the periphery of a hub of a conventional information recording disk;
Fig. 12 is a graph showing the change in the amount of birefringence before and after the welding of a hub of the prior art; and
Fig. 13 is a graph showing the change in the amount of birefringence before and after the welding of a hub in accordance with an embodiment of the present invention.

### DESCRIPTION OF THE PREFERRED EMBODIMENTS

The present invention will be described hereafter with respect to certain embodiments thereof.

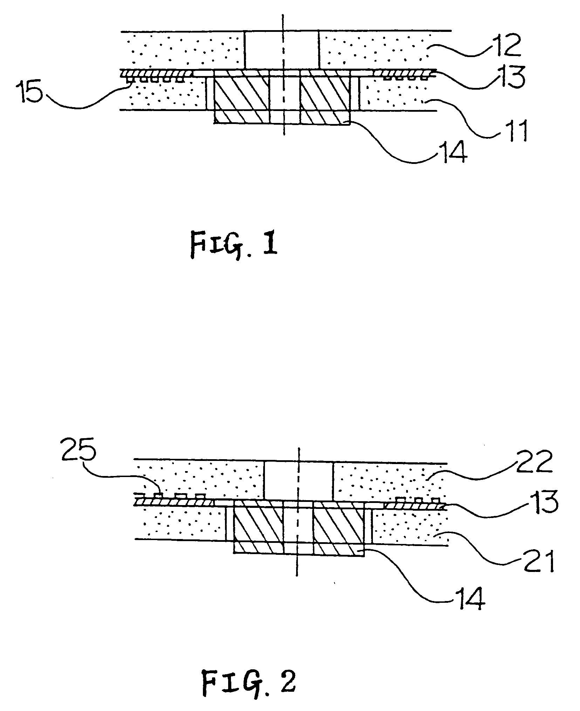

Fig. 1 illustrates a first embodiment of the present invention. A disk in accordance with this embodiment has a disk substrate 11 provided with guide grooves 15, and another disk substrate 12 bonded to the substrate 11. The disk substrates 11 and 12 are bonded by means of an adhesive 13. In this embodiment, the disk substrate 11 has an inner diameter of, e.g., ⌀ 15mm, and the other disk substrate 12 has an inner diameter of, e.g., ⌀ 10 mm. After the substrates 11 and 12 have been bonded, the guide grooves 15 formed in the substrate 11 are sensed so as to find the center of the grooves 15, and the position at which a hub is to be attached is determined. Thereafter, a hub 14 is fixed to the substrate 12 by ultrasonic welding or by means of an adhesive. It is naturally required that the outer diameter of the hub 14 is smaller than the inner diameter of the substrate 11, and the thickness of the hub 14 is equal to or greater than that of the substrate 11. These dimensions are, for instance, ⌀ 14 mm and thickness 2.2 mm. With the above-mentioned arrangement, the overall thickness of the disk is 3.4 to 3.5 mm and is relatively small. According to this embodiment, only the disk substrate 12, which does not have a recording layer, is mechanically or thermally affected by the bonding or welding of the hub, while the disk substrate 11, the one that is used in recording and reproduction, remains unaffected mechanically and thermally by the attaching of the hub. Therefore, the information recording disk can exhibit a high level of quality.

Fig. 2 illustrates a second embodiment of the present invention. A disk of this embodiment has a disk substrate 21 which has no optical recording layer, and another disk substrate 22 which has an optical recording layer and is provided with guide grooves 25. The disk substrates 21 and 22 are bonded by means of an adhesive 13. In this embodiment, the disk substrate 21 has an inner diameter of ⌀ 15mm, and the other disk substrate 22 has an inner diameter of ⌀ 10 mm. After the substrates 21 and 22 have been bonded, the guide grooves 25 formed in the substrate 21 are sensed so as to find the center of the grooves 25, and the position at which a hub is to be attached is determined. Thereafter, a hub 14 is fixed to the substrate 22 by a suitable method, for instance, by ultrasonic welding or by means of an adhesive. It is naturally required that the outer diameter of the hub 14 is smaller than the inner diameter of the substrate 21, and the thickness of the hub 14 is equal to or greater than that of the substrate 21. These dimensions are, for instance, ⌀ 14 mm and thickness 2.2 mm. With the above-mentioned arrangement, the overall thickness of the disk is 3.4 to 3.5 mm and is reduced from a conventional thickness by a thickness 1.2 mm of a disk substrate.

According to this embodiment, although the substrate 22, which has a recording layer, is mechanically or thermally affected by the bonding or welding of the hub, since recording and reproduction is effected from the side of the disk substrate 21, any influence of the attaching of the hub on the action of the disk can be prevented. Therefore, the information recording disk can exhibit a high level of quality.

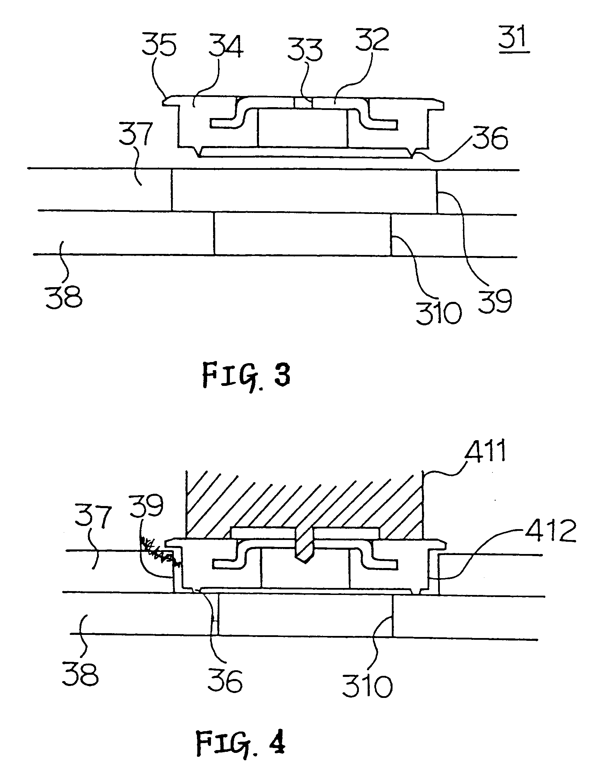

Fig. 3 is a sectional view illustrating a third embodiment of the present invention. A disk in accordance with this embodiment has a hub metal plate 32.The hub metal plate 32 is formed of a magnetic material having a Vickers hardness Hv of 200 or higher. Suitable examples are iron-based materials which have been subjected to rust-prevention treatment or which are plated with, e.g., Ni or Cr, and magnetic stainless steels, such as SUS420J2, which can be subjected to hardening treatment. The requirement of a Vickers hardness Hv of 200 or higher is based on the fact that, when experiments were each conducted by preparing a hub 31 formed of an SUS material having a Vickers hardness Hv of lower than 200 as well as an information recording disk, and by repeatedly mounting and dismounting the disk on and from an experimental apparatus,the central hole 33 of the hub 31 was deformed, rendering the disk unusable. When an SUS420J2 steel, which had been subjected to heat treatment, was used, no deformation occurred even after an information recording disk was mounted on and dismounted from an associated apparatus more than hundred thousand times. The hub 31 also has a hub plate 34. The hub plate 34 should preferably be formed of the same material as that used to form disk substrates 37 and 38. Accordingly, if the material forming the disk substrates 37 and 38 is polycarbonate, the material for the hub plate 34 should also be poylcarbonate. The outer peripheral portion of the hub plate 34 has a inclined surface 35. Since this surface 35 is provided for the purpose of ensuring that the information recording disk can be smoothly mounted on and dismounted from a drive apparatus without being caught by guide portions, the surface 35 may alternatively be chamfered. The hub plate 34 has a welding portion 36 at which the hub 31 is welded to the disk substrate 38. The welding portion 36 projects through a height on the order of 0.3 to 0.4 mm and continuously around the entire circumference. The welding portion 36 has a V-shaped cross-section, and a suitable angle at the apex is about 45 to 60°. The hub metal plate 32 and the hub plate 34 should preferably be integrated by insertion forming. However, the objects of the present invention can be achieved if these members are alternatively heat caulked or bonded.

The hub 31 having the above-described structure is fixed to the disk substrate 38 in the following manner. The hub 31 and the disk substrates 37 and 38 are forced to vibrate, using, for instance, an ultrasonic welding machine (VMP-728PR, a product of Cho-Ompa Kogyo K.K.) and via an ultrasonic horn 411 (see Fig. 4), whereby frictional heat generated by the hub 31 and the disk substrate 38 softens the resin forming the hub which thus serves to weld these members. The period required for welding is on the order of 0.1 to 0.3 sec. The hub metal plate 32 is bent in such a manner that the hub metal plate 32 is not brought into direct contact with the ultrasonic horn 411 but is in contact with the resin-formed hub plate 34, thereby enabling absorption of the impact vibration sound generated by the horn 411 during the welding operation. An arrangement in which the hub metal plate 32 is not bent and it is brought into direct contact with the ultrasonic horn 411 may alternatively be adopted, and this is allowable because the welding period is about 0.1 to 0.3 sec, as mentioned before.

Fig. 4 shows the state after the hub 31 has been fixed to the disk substrate 38.

The welding portion 36 projects through a height of 0.1 to 0.2 mm after fixing of the hub 31. Experiments were conducted, using the hub 31 and the disk substrates 37 and 38 of this embodiment. In these experiments, the outer diameter 412 of the hub 31 was set at ⌀ 14.0 to 14.8 mm, the dimension of a hole 39 formed through the disk substrate 37 was set at ⌀ 15.0 mm, and the dimension of a hole 310 formed through the disk substrate 38 was set at ⌀ 10 to 12 mm.

After the fixing of the hub 31, the peel strength was measured, and it was found that a strength of at least 5 kg was insured. Strength at this level was considered to be sufficient for withstanding the mounting and dismounting of the information recording disk as well as its high-speed rotation.

The dimension of a hole in an information recording disk is usually ⌀ 15 mm. In contrast, the diameter of the hole 310 of one 38 of the disk substrates is reduced in this embodiment. Conversely, the hole 39 of the disk substrate 38 may have a diameter of ⌀ 15 mm, instead of 10 mm, with the outer diameter 412 of the hub 31 and the hole 39 of the disk substrate 37 being enlarged. It would be understood that, with this alternative arrangement, the objects of the present invention are achieved similarly. Further, although in the above-described embodiment, the disk substrate 37 is formed with grooves (not shown), while the disk substrate 38 is not grooved, an arrangement in which the grooves are formed in the converse manner, or in which both the substrates are grooved (i.e., the disk is a double surface information recording disk, in the latter case), may alternatively be adopted. It would be understood that these arrangements are principally the same with the above-described embodiment so far as the welding portion is located away from the recording portion, and they are thus capable of achieving the objects of the present invention.

Fig. 13 shows the result of measurement of the change in the amount of birefringence before and after the welding of the hub, which was conducted using the hub of the third embodiment. When the results shown in Fig. 13 are compared with those shown in Fig. 12 which were obtained with the prior art, it is seen that, while the amount of variation in birefringence at the innermost periphery (i.e., at R = 23 mm) of the magnetic recording portion is on the order of 40 nm with the prior art, the corresponding amount was on the order of 5 nm or smaller with the present invention and was a negligible value. Further, the disk of the present invention was mounted on a drive to examine the effects of heat transmitted from the drive motor to the disk through the hub. In this experiment, the effect was found too small to be measured.

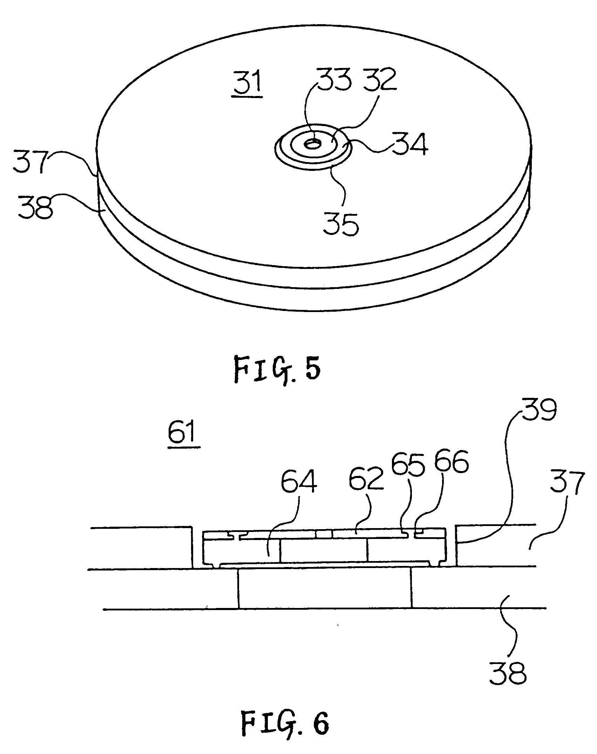

Fig. 5 is a perspective view of the information recording disk in accordance with this third embodiment. Only a limited part of the hub projects. Thus, the information recording disk itself has a reduced thickness. Besides, no additional structures are required for receiving the hub portion during mounting of the information recording disk on the drive, thereby contributing much to reducing the thickness of and simplification of the drive.

Although in the above-described embodiment, the hub has a structure which is suitable for ultrasonic welding, this is a mere example, and the present invention is not limited thereto. Similar effects can be provided with an arrangement in which a metal hub is fixed to a disk substrate by means of an adhesive.

A fourth embodiment is illustrated in Fig. 6. This embodiment is a modification of the third embodiment, in which the hub has no flange portion. Materials of the same types as those in the embodiment 3 may be used to form a hub metal plate 62 and a hub plage 64 in this embodiment. The joining of the hub metal plate 62 and the hub plate 64 is effected by means of a plurality of inversely tapered holes or stepped holes 65 and 66 formed in the circumferential periphery of the hub metal plate 62 and by insertion forming or heat caulking.

In this embodiment, the hub metal plate 62 is a flat plate and is therefore adapted to be brought into direct contact with the ultrasonic horn 411. But this is not seriously disadvantageous. A hub 61 is welded to the disk substrate 38 using a method similar to that used in the third embodiment, and the welding conditions remain unchanged from those used in the third embodiment. Accordingly, characteristics of the disk, such as the strength with which the hub 61 is welded to the disk substrate 38 as well as the change in the amount of birefringence before and after the welding, are the same as those obtained in the third embodiment.

Further, as shown in Fig. 6, the hub 61 is received within the hole 39 of the disk substrate 37. This arrangement enables more effective achievement of the reduction in the thickness of the information recording disk, the simplification and thickness-reduction of the drive, and other effects.

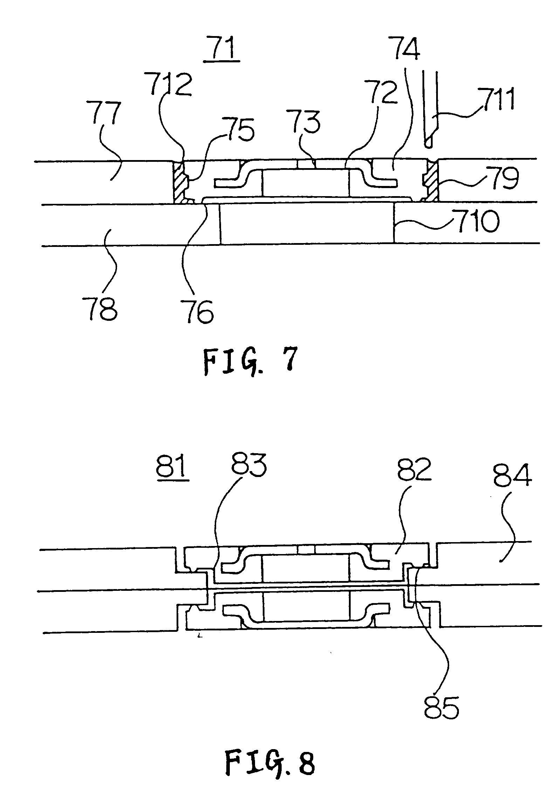

A fifth embodiment is illustrated in Fig. 7.

The arrangement of this embodiment is adopted when ultrasonic welding alone does not ensure a sufficient welding strength. A hub plate 74 of this embodiment is formed of a thermoplastic resin such as polycarbonate or PMMA. The material for forming a hub metal plate 72, and the method of joining the hub metal plate 72 and the hub plate 74 may be the same as those used in the third embodiment. However, if a hub 71 having the above-described structure is welded to disk substrates 77 and 78 formed of different materials of, for instance, glass and an epoxy resin, it is impossible to achieve a welding strength which is, in practice, high enough to withstand external disturbances and high-speed rotation. The disturbances mentioned above includes impact which may be applied when the information recording disk is being mounted on and dismounted from the drive as well as impact which may be applied when the information disk has erroneously been dropped. The strength which is high enough to withstand high-speed rotation is a strength with which the hub and the substrates can withstand forces such as rotational torque and centrifugal force which are generated when the disk is rotated at a speed of not less than 1800 rpm.

In such a case where a practically sufficient strength is not obtained by welding alone, a means of reinforcement is necessary, for instance, using an adhesive.

A method of attaching the hub 71 to the substrates 77 and 78 of this embodiment will be described below following the order of processes. First, it is necessary to align the center of grooves or pits formed in the information recording disk and the center of a central hole 73 of the hub 71, whatever the method may be that is to be used to fix the hub 71. For this purpose, the configuration concerned is detected by means of image detector, such as a pick-up, and the center is calculated by means of, for instance, a computer. The use of an ultrasonic welding machine (VMN-72PR, product of Cho-Ompa Kogyo K.K.) is advantageous because this machine is capable of continuously performing operations from the configuration detection to the welding of the hub 71 to the disk substrate 78. After the hub 71 has been welded to the disk substrate 78 by means of, for instance, the above-mentioned machine, if the hub 71 is pushed strongly by finger from the side of a hole 710 formed in the substrate 78, the hub 71 becomes detached. The welding, however, serves properly as a temporary fixing means until a proper fixing is effected by means of an adhesive. When the information recording disk has been subjected to centering and temporary fixing in this way, an adhesive 712 is charged from a dispenser 711 into the gap (hatched in Fig. 7) between the hub 71 and a hole 79 formed in the disk substrate 77. The type of the adhesive 712 is not particularly specified so far as it acts strongly with respect to glass or resin. Since a welding portion 76 already formed in the hub plate 74 acts as a stopper which limits the flow of the adhesive, the adhesive may have a low viscosity. A notch 75 is formed in the hub plate 74 for improving the peel strength of the hub 71. The construction of the disk in accordance of this embodiment that allows the dispenser to be disposed above the hub for charging the adhesive is advantageous in that a single machine can be used to perform the processes of centering, temporary fixing, and proper fixing, while keeping the machine simple.

As described above, this embodiment can achieve the effects provided by the third and fourth embodiments, and also can achieve an increase in the strength with which the hub is attached to the disk substrate by not only welding the lower surface of the hub to the disk substrate but also bonding the side surface of the hub and the wall of the hole formed in the substrate. The adhesive can be charged in a simple manner using a dispenser and from above the disk substrate and the hub, thereby leading to a reduction in production costs. Thus, great effect can be provided by the above-described embodiment.

Fig. 8 illustrates a sixth embodiment in which disk substrates have stepped holes. Hubs 81 used in this embodiment each has a step 83 formed in its hub plate 82. On the other hand, a disk substrate 84 is also provided with a stepped hole in such a manner that the step portions have different inner diameters which are respectively larger than the outer diameters of the stepped portions of the step 83 formed in the hub 81. With this arrangement, the hub 81 is welded to a step upper surface 85 of the substrate 84. Also in this embodiment, the hub 81 is received within the stepped hole of the disk substrate 84, thereby enabling a reduction in the thickness of the information recording disk.

Although the disk illustrated in Fig. 8 is a double-sided disk, the present invention is not limited thereto, and the disk may alternatively be single sided and consist of a single substrate. Further, although in the above-described embodiment, the hub has a structure suitable for ultrasonic welding, this is not limitative. Exactly the same effects can be provided if the hub is formed of a metal and is fixed to the disk substrate by means of an adhesive.

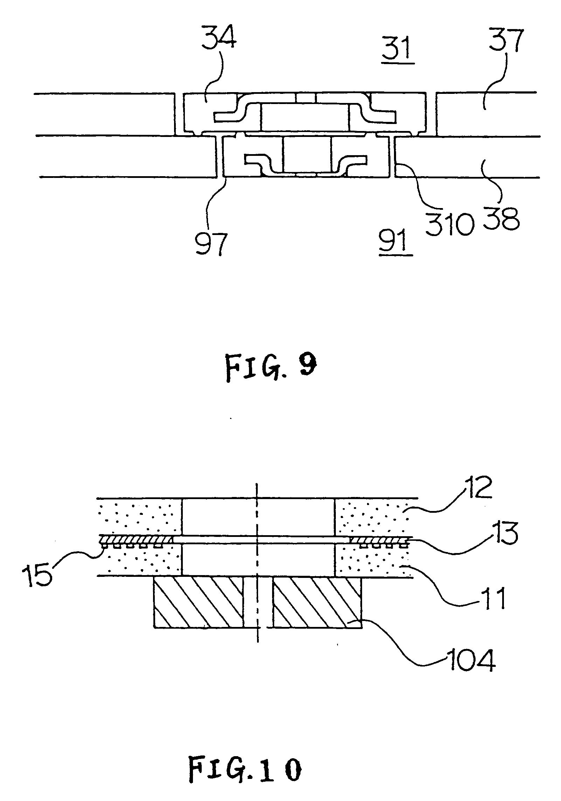

Fig. 9 illustrates another double-sided information recording disk. The hub 31 which has the same structure as that of the hub used in the third embodiment (Fig. 4) is attached to the disk substrate 38 by the same method used in the third embodiment. Another hub 91 has an outer diameter 97 which is smaller than the inner diameter of the hole 310 of the other disk substrate 38, and the lower surface of the hub plate 34 is welded to the substrate 38 while the guide grooves formed in the disk substrate 38 are being sensed. Also in this embodiment, the hubs are arranged within the holes formed in the disk substrates, thereby enabling a reduction in the thickness of the information recording disk.

As described above, according to the present invention, the dimensions of the hub are reduced, and the portion at which the hub is attached to the information recording disk is located away from the recording portion, thereby reducing the level of optical influence on the disk substrates, in particular, reducing the amount of variation in birefringence to a negligible level, and thereby enhancing the quality of the information recording disk. Further, part of or the entire hub is received in the hole portion of the disk substrates, thereby achieving a reduction in the total thickness of the information recording disk and a good design. Still further, the arrangement of the disk of the present invention eliminates the necessity for providing structures for coping with the projecting hub, thereby contributing to simplification of the design of the drive, and reduction in the thickness of the drive while maintaining the reliability of the drive.

Although the effects of the present invention are provided to a greater extent if the disk substrates are formed of a resin, the present invention is not limited thereto. The disk may alternatively be formed of glass which is optically stable with respect to characteristics such as birefringence, a polystyrene-polycarbonate composite, or an acrylic material. The effect that the overall thickness of the disk is reduced is greatly advantageous.

In the foregoing embodiments, one of the disk substrates is formed with a small-diameter hole, the disk substrate may alternatively be formed with no small-diameter hole, and this raises substantially no problem. For instance, the substrate may be formed of a glass material and has no small-diameter hole. Further, such a ceramic material as Al₂O₃ or Ta₂O₅ which is not optically transparent, and such a metal as Al or Ti may be used as a material to form the disk substrate that is remote from the optical head for recording and reproduction.

## Claims

1. An information recording disk comprising a recording layer for recording information, a disk substrate (84) carrying said recording layer, and a hub (81) for clamping said disk to a disk drive, said disk substrate (84) having a stepped hole formed in the central portion thereof, said hub (81) being inserted from the side of said disk substrate (84) with the larger diameter portion of said stepped hole and having a surface portion resting on the ring shaped surface of said disk substrate (84) connecting the larger and the smaller diameter portions of the stepped hole; characterised in that the outer diameter of the hub is smaller than the inner diameter of the larger diameter portion of the stepped hole and the hub is positioned within said stepped hole such that a ring gap is formed between the peripheral surface of the hub and the wall of said disk substrate (84) surrounding said stepped hole.

2. A disk according to claim 1 wherein said disk substrate comprises two substrate plates (11, 12) superposed upon each other, each substrate plate having a hole in a central portion thereof the two holes having different diameters and together forming said stepped hole.

3. A disk according to claim 2, wherein the substrate plate (11) having the larger diameter hole is provided with said recording layer.

4. A disk according to any of claims 1 to 3, wherein the outer peripheral edge (35) of said hub (31) is chamfered.

5. A disk according to any of the preceding claims, wherein said hub (31) comprises a hub metal plate (32) formed of a magnetic metal and a hub plate (34) formed of a high-polymer resin, said disk (37, 38) is a transparent disk and part of the entire hub (31) is received in the larger portion of said stepped hole.

6. A disk according to claim 5, wherein said hub plate (34) has a substantially ring-shaped welding portion (36) whose diameter satisfies the relationship: larger diameter of stepped hole > diameter of said welding portion > smaller diameter of stepped hole.

7. A disk according to any of claims 1 to 5, wherein said hub (71) comprises a hub plate (74) having a welding portion (76), said hub (71) being fixed by means of an adhesive (712) applied to a space defined by said welding portion (76), the wall of said larger diameter portion of said stepped hole (79) and a portion of the surface connecting the larger and the smaller diameter portions of the stepped hole.

## Patentansprüche

1. Informationsaufnahmeplatte, umfassend eine Aufnahmeschicht zur Aufnahme von Information, einen die Aufnahmeschicht tragenden Plattenträger (84) und eine Nabe (81) zur Festklemmen der Platte an einem Plattenantrieb, wobei der Plattenträger (84) ein in seinem mittleren Teil ausgebildetes abgestuftes Loch aufweist, die Nabe von der Seite des Plattenträgers (84) mit dem Teil größeren Durchmessers des abgestuften Lochs eingesetzt ist und einen Oberflächenabschnitt aufweist, der auf der ringförmigen Fläche des Plattenträgers (84) aufliegt, welcher den Teil mit größerem Durchmesser und denjenigen mit kleinerem Durchmesser des abgestuften Lochs verbindet, dadurch gekennzeichnet, daß der Außendurchmesser der Nabe kleiner ist als der Innendurchmesser des Teiles des abgestuften Lochs mit dem größerem Durchmesser und das die Nabe innerhalb des abgestuften Lochs so positioniert ist, daß ein Ringspalt zwischen der Umfangsfläche der Nabe und der das abgestufte Loch umgebenden Wand des Plattenträgers (84) gebildet wird.

2. Platte nach Anspruch 1, bei der der Plattenträger zwei aufeinandergelegte Trägerplatten (11, 12) umfaßt, von denen jede der Trägerplatten in ihrem mittleren Abschnitt ein Loch aufweist, wobei die beiden Löcher unterschiedliche Durchmesser aufweisen und zusammen das abgestufte Loch bilden.

3. Platte nach Anspruch 2, bei der die Trägerplatte (11) mit dem Loch größeren Durchmessers mit der Aufnahmeschicht versehen ist.

4. Platte nach einem der Ansprüche 1 bis 3, bei der die äußere Randkante (35) der Habe (31) abgeschrägt ist.

5. Platte nach einem der vorhergehenden Ansprüche, bei der die Nabe (31) eine aus einem magnetischen Metall gebildete Nabenmetallplatte (32) und eine aus einem Hochpolymer-Harz gebildete Nabenplatte (34) umfaßt, wobei die Platte (37, 38) eine transparente Platte ist und ein Teil der gesamten Nabe (31) in dem größeren Teil des abgestuften Lochs aufgenommen ist.

6. Platte nach Anspruch 5, bei dem die Nabenplatte (34) einen im wesentlichen ringförmigen Schweißabschnitt (36) aufweist, dessen Durchmesser die Beziehung erfüllt: größerer Durchmesser des abgestuften Lochs > Durchmesser des Schweißabschnitts > kleinerer Durchmesser des abgestuften Lochs.

7. Platte nach einem der Ansprüche 1 bis 5, bei dem die Nabe (71) eine einen Schweißabschnitt (76) aufweisende Nabenplatte (74) umfaßt, die Nabe (74) mit Hilfe eines Klebstoffs (712) fixiert ist, der in einem Raum aufgetragen ist, welcher von dem Schweißabschnitt (76), der Wand des Teiles größeren Durchmessers des abgestuften Lochs (79) und einem Teil der Fläche gebildet wird, welche den Teil größeren Durchmessers und denjenigen kleineren Durchmessers des abgestuften Lochs verbindet.

## Revendications

1. Un disque d'enregistrement d'information comprenant une couche d'enregistrement pour enregistrer de l'information, un substrat de disque (84) qui porte la couche d'enregistrement, et un moyeu (81) pour bloquer le disque sur un mécanisme d'entraînement de disque, le substrat de disque (84) ayant un trou à épaulement formé dans sa partie centrale, le moyeu (81) étant introduit par le côté du substrat de disque (84) ayant la partie de diamètre supérieur du trou à épaulement, et ayant une partie de surface qui repose sur la surface de forme annulaire du substrat de disque (84) reliant les parties de diamètre supérieur et de diamètre inférieur du trou à épaulement; caractérisé en ce que le diamètre extérieur du moyeu est inférieur au diamètre intérieur de la partie de diamètre supérieur du trou à épaulement, et le moyeu est positionné à l'intérieur du trou à épaulement de façon qu'un espace annulaire soit formé entre la surface périphérique du moyeu et la paroi du substrat de disque (84) qui entoure le trou à épaulement.

2. Un disque selon la revendication 1, dans lequel le substrat de disque comprend deux plaques de substrat (11, 12) superposées l'une sur l'autre, chaque plaque de substrat ayant un trou dans sa partie centrale, et les deux trous ayant des diamètres différents et formant ensemble le trou à épaulement.

3. Un disque selon la revendication 2, dans lequel la plaque de substrat (11) ayant le trou de diamètre supérieur est munie de la couche d'enregistrement.

4. Un disque selon l'une quelconque des revendications 1 à 3, dans lequel le bord périphérique extérieur (35) du moyeu (31) est chanfreiné.

5. Un disque selon l'une quelconque des revendications précédentes, dans lequel le moyeu (31) comprend une plaque métallique de moyeu (31) qui est formée par un métal magnétique, et une plaque de moyeu (34) qui est formée par une résine consistant en un haut polymère, le disque (37, 38) est un disque transparent et une partie du moyeu entier (31) est logée dans la partie de diamètre supérieur du trou à épaulement.

6. Un disque selon la revendication 5, dans lequel la plaque de moyeu (34) comporte une partie de soudage (36) ayant pratiquement une forme annulaire, dont le diamètre statisfait la relation : diamètre supérieur du trou à épaulement > diamètre de la partie de soudage > diamètre inférieur du trou à épaulement.

7. Un disque selon l'une quelconque des revendications 1 à 5, dans lequel le moyeu (71) comprend une plaque de moyeu (74) ayant une partie de soudage (76), le moyeu (71) étant fixé au moyen d'un adhésif (712) qui est appliqué dans un espace défini par la partie de soudage (76), la paroi de la partie de diamètre supérieur du trou à épaulement (79) et une partie de la surface qui relie les parties de diamètre supérieur et de diamètre inférieur du trou à épaulement.
